# EUROPÄISCHE PATENTSCHRIFT

(11) **EP 4 438 444 B1**
(45) Veröffentlichungstag und Bekanntmachung des Hinweises auf die Patenterteilung: **15.04.2026**
(21) Anmeldenummer: 24158996.9
(22) Anmeldetag: 22.02.2024
(51) Int. Cl.: B62D 5/09

(54) **VERFAHREN ZUM BETREIBEN EINER HYDROSTATISCHEN FAHRZEUGLENKUNG**
METHOD FOR OPERATING A HYDROSTATIC VEHICLE STEERING SYSTEM
PROCÉDÉ DE FONCTIONNEMENT D'UNE DIRECTION HYDROSTATIQUE DE VÉHICULE

(30) Priorität: 20.03.2023 DE 102023106914
(43) Veröffentlichungstag der Anmeldung: 02.10.2024
(73) Patentinhaber: Deere & Company, Moline, IL 61265 (US)
(72) Erfinder: BROCKE, STEFAN, 68163 Mannheim (DE); HARTMANN, FABIAN, 68163 Mannheim (DE); HINGNE, ABHIJIT, 68163 Mannheim (DE)
(74) Vertreter: Dehnhardt, Florian Christopher

(56) Entgegenhaltungen:
- EP-A1- 2 896 547
- DE-A1- 102022 103 106

## Beschreibung

Die Erfindung betrifft ein Verfahren zum Betreiben einer hydrostatischen Fahrzeuglenkung.

Der Einsatz hydrostatischer Fahrzeuglenkungen erlaubt eine komfortable Lenkung selbst schwerer Nutzfahrzeuge, wie beispielsweise landwirtschaftlicher Traktoren, aber auch anderer Fahrzeuge aus dem Land-, Forst- oder Baumaschinenbereich.

Ihrem grundsätzlichen Aufbau entsprechend umfasst eine derartige hydrostatische Fahrzeuglenkung eine als Lenkrad ausgebildete Lenkhandhabe, mittels derer sich ein aus einer hydraulischen Hochdruckpumpe mit unter Druck stehender Hydraulikflüssigkeit gespeistes Lenkdosierventil in Gestalt eines Orbitrols in Drehung versetzen lässt, um einen damit verbundenen Lenkzylinder zur Verstellung lenkbarer Räder des Fahrzeugs anzusteuern. Die Funktion des Orbitrols beschränkt sich dabei auf die Einstellung des Hydraulikflusses in Richtung des Lenkzylinders, wohingegen die Bereitstellung des Hydraulikdrucks, mithin der hydraulischen Energie, seitens der hydraulischen Hochdruckpumpe erfolgt. Auf diese Weise lassen sich problemlos Stellkräfte erzeugen, die selbst den Verhältnissen schwerer Fahrzeuge Rechnung tragen.

Daneben gewinnen Lenkassistenzsysteme zunehmend an Bedeutung, wie sie vor allem aus dem Automobilbereich unter anderem zur Unterstützung des Bedieners bei der Einhaltung einer vorgegebenen Fahrspur bekannt sind. In letzterem Fall erfolgt in der Regel eine Aufschaltung haptisch wahrnehmbarer Betätigungs- bzw. Handmomente auf eine mit einem Lenkrad in Verbindung stehende Lenksäule, und zwar derart, dass der Bediener einen unmissverständlichen Hinweis auf die Richtung einer gegebenenfalls auszuführenden Fahrtrichtungskorrektur erhält.

Im Gegensatz zu im Automobilbereich verwendeten Lenksystemen besteht bei hydrostatischen Fahrzeuglenkungen kein mechanischer Durchgriff zwischen dem Lenkrad und den lenkbaren Fahrzeugrädern. Dies wiederum führt zu Besonderheiten für den Fall, dass eine solche hydrostatische Fahrzeuglenkung in Verbindung mit unterschiedlichen Lenkassistenzsystemen betrieben werden soll.

Die Merkmale des Oberbegriffs des unabhängigen Anspruchs werden in dem Dokument EP2896547A1 offenbart.

Aufgabe der vorliegenden Erfindung ist es daher, ein hinsichtlich einer Verwendung mit unterschiedlichen Lenkassistenzsystemen optimiertes Verfahren zum Betreiben einer hydrostatischen Fahrzeuglenkung anzugeben.

Diese Aufgabe wird durch ein Verfahren zum Betreiben einer hydrostatischen Fahrzeuglenkung mit den Merkmalen des Patentanspruchs 1 gelöst.

Vorteilhafte Weiterbildungen des erfindungsgemäßen Verfahrens gehen aus den Unteransprüchen hervor.

Bei dem Verfahren zum Betreiben einer hydrostatischen Fahrzeuglenkung umfasst die Fahrzeuglenkung eine mittels einer Lenkhandhabe drehbetätigbare Eingangswelle, eine Ausgangswelle zur Drehbetätigung eines Lenkdosierventils, das der hydraulischen Ansteuerung eines mit lenkbaren Fahrzeugrädern zusammenwirkenden Lenkzylinders dient, eine Kupplungseinrichtung zur Herstellung einer lösbaren Drehverbindung zwischen Ein- und Ausgangswelle, sowie einen Stellantrieb zur Aufprägung eines vorgebbaren Lenkmoments auf die Ausgangswelle. Hierbei nimmt die Kupplungseinrichtung in einem für eine manuelle Lenkbetätigung vorgesehenen ersten Betriebsmodus unter der Wirkung einer rückstellenden Federkraft selbsttätig eine geschlossene Kupplungsstellung ein und wird in einem für eine autonome Lenkbetätigung vorgesehenen zweiten Betriebsmodus auf Veranlassung einer Kontrolleinheit entgegen der Wirkung der rückstellenden Federkraft in eine geöffnete Kupplungsstellung verbracht.

Bei dem für eine manuelle Lenkbetätigung vorgesehenen ersten Betriebsmodus erfolgen die Lenkeingriffe über die üblicherweise als Lenkrad ausgebildete Lenkhandhabe von Seiten eines Bedieners. Hierbei lässt sich mittels des Stellantriebs durch gezielte Aufprägung eines entsprechenden Lenkmoments auf die Ausgangswelle und damit auf die mit dieser über die Kupplungseinrichtung in Drehverbindung stehende Eingangswelle in einem von der Kontrolleinheit ausgeführten "Feedback-Assistenzmodus" ein haptisch wahrnehmbares Betätigungs- bzw. Handmoment an der Lenkhandhabe hervorrufen, um beispielsweise (i) auf eine über die Lenkhandhabe auszuführende Fahrtrichtungskorrektur hinzuweisen, (ii) fahrtbedingt an den lenkbaren Fahrzeugrädern einwirkende Stellmomente rückzumelden, und/oder (iii) einen vom Lenkeinschlag sowie gegebenenfalls weiteren Parametern abhängigen Lenkwiderstand zu erzeugen. Andererseits lässt sich aber auch in einem von der Kontrolleinheit ausgeführten **"Emergency-Assistenzmodus"** bei einem Ausfall der Hydraulikversorgung der hydrostatischen Fahrzeuglenkung eine aktive Lenkkraftunterstützung verwirklichen. Das mittels des Stellantriebs erzeugte Lenkmoment kann hierbei mittels eines der Ausgangswelle zugeordneten Drehmomentsensors erfasst und zur Bildung eines Regelkreises an die Kontrolleinheit rückgemeldet werden.

Mit anderen Worten wird der Stellantrieb im ersten Betriebsmodus von der Kontrolleinheit bevorzugt im Sinne einer haptisch wahrnehmbaren Lenkungsrückmeldung und/oder einer Verringerung bedienerseitig aufzubringender Lenkbetätigungskräfte angesteuert.

Der zweite Betriebsmodus ist indes der Durchführung eines autonomen Lenkbetriebs vorbehalten. Hierbei kann der Stellantrieb im zweiten Betriebsmodus von der Kontrolleinheit nach Maßgabe von seitens einer autonomen Fahrzeugsteuerung vorgegebenen Lenkbefehlen angesteuert werden, beispielsweise entsprechend einer von dem Fahrzeug zu durchfahrenden Bahntrajektorie. Die durch Öffnen der Kupplungseinrichtung vorgenommene Trennung der Drehverbindung zwischen Ein- und Ausgangswelle gewährleistet in einem solchen **"Fahr-Assistenzmodus",** dass sich die Lenkhandhabe dabei nicht in für den Bediener störender Art und Weise mitbewegt. Die Lenkhandhabe kann währenddessen insoweit fixiert werden, als eine freie Drehung der Eingangswelle mittels eines passiven oder von der Kontrolleinheit betätigbaren Bremselements im zweiten Betriebsmodus gehemmt wird.

Der vorgenannte Fahr-Assistenzmodus kann bei landwirtschaftlichen Traktoren des Herstellers John Deere beispielsweise im Rahmen der Verwendung eines sogenannten AutoTrac-Lenksystems verwirklicht sein.

Ergänzend ist anzumerken, dass der Betrieb der Fahrzeuglenkung ausfallsicher gestaltet ist, denn die Kupplungseinrichtung kehrt im Fehlerfalle unter der Wirkung der rückstellenden Federkraft von selbst in den für eine manuelle Lenkbetätigung vorgesehenen ersten Betriebsmodus zurück. Die Lenkbarkeit des Fahrzeugs seitens des Bedieners ist damit auch unter solchen Umständen sichergestellt.

Im Ergebnis erlaubt es das erfindungsgemäße Verfahren zum Betreiben einer hydrostatischen Fahrzeuglenkung, den Erfordernissen unterschiedlicher, den Stellantrieb nutzender Lenkassistenzsysteme gerecht zu werden.

Bei dem Stellantrieb handelt es sich zum Beispiel um einen von der Kontrolleinheit ansteuerbaren elektrischen Getriebemotor. Hierbei ist es denkbar, dass in den Getriebemotor eine Rutschkupplung oder dergleichen integriert ist, die es erlaubt, dass der Bediener im ersten Betriebsmodus ungeachtet des jeweiligen Betriebszustands des Stellantriebs durch Drehen der Lenkhandhabe und damit des Lenkdosierventils jederzeit Einfluss auf die Fahrzeuglenkung nehmen kann. Alternativ kann zu diesem Zweck auch eine Begrenzung des Motormoments des Getriebemotors auf einen vom Bediener über die Lenkhandhabe überwindbaren Wert oder aber eine Einrichtung zur Abschaltung des Getriebemotors vorgesehen sein.

Um sicherzustellen, dass der Bediener stets die Kontrolle über die Fahrzeuglenkung behält, besteht zudem die Möglichkeit, dass die Kupplungseinrichtung ausgehend vom zweiten Betriebsmodus im Falle einer über die Lenkhandhabe ausgeübten manuellen Lenkbetätigung und/oder eines Druckabfalls einer zur Speisung des Lenkdosierventils mit unter Druck stehender Hydraulikflüssigkeit vorgesehenen Hydraulikquelle in den ersten Betriebsmodus umgeschaltet wird. Letzteres entspricht dem für einen einem Ausfall der Hydraulikversorgung der hydrostatischen Fahrzeuglenkung vorgesehenen Emergency-Assistenzmodus. Die Umschaltung in den ersten Betriebsmodus kann in diesem Fall seitens der Kontrolleinheit selbsttätig erfolgen, wozu diese die Signale eines Winkelsensors zur Erfassung einer an der Lenkhandhandhabe bzw. der Eingangswelle der Fahrzeuglenkung auftretenden Drehung bzw. eines Drucksensors zur Überwachung eines Förderdrucks einer von der Hydraulikquelle umfassten hydraulischen Hochdruckpumpe auswertet.

Erfindungsgemäß wird die Kupplungseinrichtung auf Veranlassung eines mittels einer Betätigungsanordnung erzeugbaren Umschaltsignals ausschließlich dann in die offene Kupplungsstellung verbracht, wenn von der Kontrolleinheit übermittelte erste und zweite Auslösesignale an der Betätigungsanordnung gleichzeitig anliegen. Die solchermaßen gebildete UND-Verknüpfung schließt weitgehend aus, dass die mittels der Kupplungseinrichtung zwischen Ein- und Ausgangswelle hergestellte Drehverbindung unbeabsichtigt aufgetrennt wird.

Zunächst ist es vorstellbar, dass die Kupplungseinrichtung elektrisch betätigbar ausgebildet ist, wobei diese in unbestromtem Zustand unter der Wirkung einer rückstellenden Federkraft eines elektrisch steuerbaren Umschaltmechanismus selbsttätig die geschlossene Kupplungsstellung einnimmt. Hierbei besteht die Möglichkeit, dass die Betätigungsanordnung eine Reihenschaltung erster und zweiter elektrischer Schließkontakte umfasst, die zur Erzeugung eines den Umschaltmechanismus ansteuernden elektrischen Umschaltsignals auf Veranlassung des ersten und zweiten Auslösesignals in eine geschlossene Stellung verbracht werden. Die insbesondere als Bestandteil zugehöriger Relais ausgebildeten elektrischen Schließkontakte zeichnen sich dadurch aus, dass diese in unbetätigtem Zustand unter der Wirkung einer rückstellenden Federkraft von selbst eine geöffnete Stellung einnehmen. Hierdurch lässt sich eine Failsafe-Funktion verwirklichen, die bei einem Ausfall eines der beiden Relais oder fehlerhafter Auslösesignale sicherstellt, dass die Kupplungseinrichtung in ihrer geschlossenen Kupplungsstellung verbleibt. Die Kupplungseinrichtung wird ausschließlich dann in ihre geöffnete Kupplungsstellung verbracht, sofern beide Schließkontakte gleichzeitig ihre geschlossene Stellung einnehmen und dabei das ausgangsseitig anliegende elektrische Umschaltsignal einen zur Betätigung der Kupplungseinrichtung bzw. des Umschaltmechanismus geeigneten Spannungswert annimmt. Die Relais können hierbei elektromechanisch oder aber als Halbleiter ausgeführt sein.

Alternativ lässt sich die vorbeschriebene Funktion auch für den Fall verwirklichen, dass die Kupplungseinrichtung hydraulisch druckbetätigbar ausgebildet ist, wobei diese in drucklosem Zustand unter der Wirkung einer rückstellenden Federkraft eines hydraulisch steuerbaren Umschaltmechanismus selbsttätig die geschlossene Kupplungsstellung einnimmt. Dazu kann die Betätigungsanordnung eine Parallelschaltung erster und zweiter hydraulischer 3/2-Wegeventile umfassen, deren Ventilauslässe miteinander verbunden sind, wobei diese zur Erzeugung eines den Umschaltmechanismus ansteuernden hydraulischen Umschaltsignals auf Veranlassung des ersten und zweiten Auslösesignals aus einer die Ventilauslässe mit einem Hydraulikreservoir verbindenden Ruheposition in eine die Ventilauslässe mit der Hydraulikquelle verbindende Betriebsposition überführt werden. Befindet sich eines der beiden 3/2-Wegeventile in seiner Ruheposition, so ist ein Druckaufbau an den Ventilauslässen aufgrund der mit dem Hydraulikreservoir bestehenden Druckentlastungsverbindung unterbunden. Auf diese Weise ist auch hier eine Failsafe-Funktion verwirklicht, die bei einem Ausfall eines der beiden 3/2-Wegeventile oder fehlerhafter Auslösesignale sicherstellt, dass die Kupplungseinrichtung in ihrer geschlossenen Kupplungsstellung verbleibt.

Im Ergebnis wird die Kupplungseinrichtung ausschließlich dann in ihre geöffnete Kupplungsstellung verbracht, sofern beide 3/2-Wegeventile sich gleichzeitig in ihrer Betriebsposition befinden und das an den Ventilauslässen anliegende hydraulische Umschaltsignal einen zur Betätigung der Kupplungseinrichtung bzw. des Umschaltmechanismus geeigneten Druckwert annimmt.

Die eigentliche Betätigung der Relais bzw. der 3/2-Wegeventile seitens der Kontrolleinheit erfolgt vorzugsweise elektrisch, in letzterem Fall durch Verwendung eines jeweils zugehörigen Solenoids.

Das erfindungsgemäße Verfahren zum Betreiben einer hydrostatischen Fahrzeuglenkung wird im Folgenden anhand der beigefügten Zeichnungen näher erläutert. Dabei beziehen sich identische Bezugszeichen auf übereinstimmende oder bezüglich ihrer Funktion vergleichbare Komponenten. Es zeigen:
- Fig. 1: eine erste Ausführungsform einer mittels des erfindungsgemäßen Verfahrens betriebenen hydrostatischen Fahrzeuglenkung in einem ersten Betriebsmodus,
- Fig. 2: die in Fig. 1 wiedergegebene hydrostatische Fahrzeuglenkung in einem zweiten Betriebsmodus,
- Fig. 3: eine von der in Fig. 1 wiedergegebenen hydrostatischen Fahrzeuglenkung ausgeführte Failsafe-Funktion,
- Fig. 4: eine zweite Ausführungsform einer mittels des erfindungsgemäßen Verfahrens betriebenen hydrostatischen Fahrzeuglenkung in einem ersten Betriebsmodus,
- Fig. 5: die in Fig. 4 wiedergegebene hydrostatische Fahrzeuglenkung in einem zweiten Betriebsmodus, und
- Fig. 6: eine von der in Fig. 4 wiedergegebenen hydrostatischen Fahrzeuglenkung ausgeführte Failsafe-Funktion.

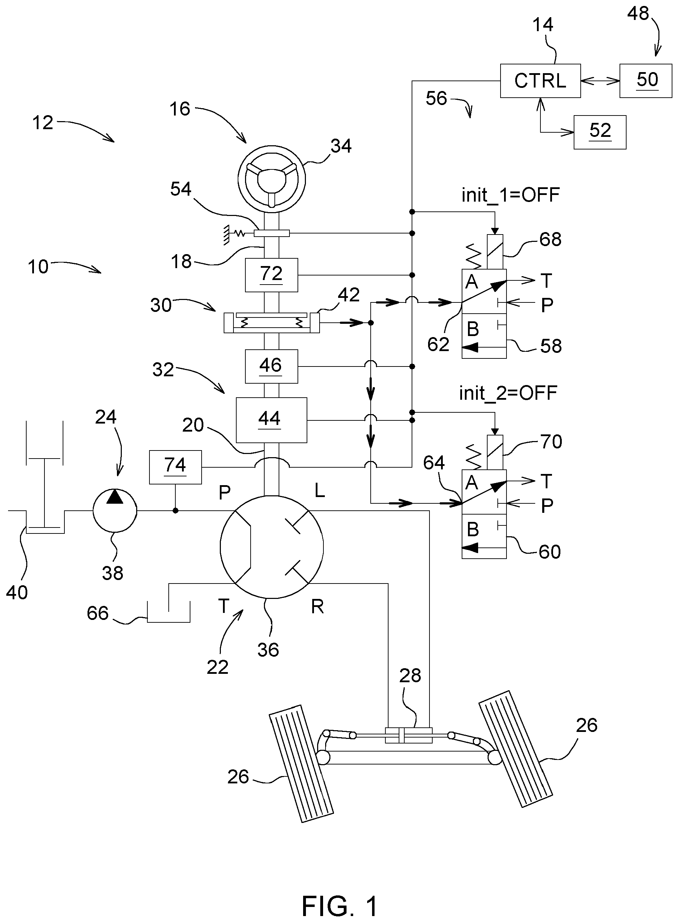

Fig. 1 bis 3 zeigen eine erste Ausführungsform einer mittels des erfindungsgemäßen Verfahrens betriebenen hydrostatischen Fahrzeuglenkung 10 in einem als landwirtschaftlicher Traktor 12 ausgebildeten Fahrzeug. Dargestellt sind verschiedene Betriebszustände, wobei die Ausführung des erfindungsgemäßen Verfahrens einer mikroprozessorgesteuerten Kontrolleinheit 14 obliegt, die ebenfalls Bestandteil der Fahrzeuglenkung 10 ist.

Die Verwendung in einem landwirtschaftlichen Traktor 12 hat lediglich beispielhaften Charakter, ebenso gut kann es sich auch um ein anderes Fahrzeug aus dem Land-, Forst- oder Baumaschinenbereich handeln.

Wie in Fig. 1 zu erkennen ist, umfasst die in dem nicht näher dargestellten landwirtschaftlichen Traktor 12 untergebrachte hydrostatische Fahrzeuglenkung 10 eine mittels einer Lenkhandhabe 16 drehbetätigbare Eingangswelle 18, eine Ausgangswelle 20 zur Drehbetätigung eines Lenkdosierventils 22, das aus einer Hydraulikquelle 24 mit unter Druck stehender Hydraulikflüssigkeit gespeist wird und der hydraulischen Ansteuerung eines mit lenkbaren Fahrzeugrädern 26 zusammenwirkenden Lenkzylinders 28 dient, eine Kupplungseinrichtung 30 zur Herstellung einer lösbaren Drehverbindung zwischen Ein- und Ausgangswelle 18, 20, sowie einen Stellantrieb 32 zur Aufprägung eines vorgebbaren Lenkmoments auf die Ausgangswelle 20. Bei der Lenkhandhabe 16 handelt es sich beispielsgemäß um ein herkömmliches Lenkrad 34.

Die Funktion des als Orbitrol 36 ausgebildeten Lenkdosierventils 22 beschränkt sich dabei auf die Einstellung des Hydraulikflusses in Richtung des Lenkzylinders 28, wohingegen die Bereitstellung des Hydraulikdrucks, mithin der hydraulischen Energie, seitens der als hydraulische Hochdruckpumpe 38 ausgebildeten Hydraulikquelle 24 erfolgt. Die hydraulische Hochdruckpumpe 38 wird hierbei von einem Antriebsmotor 40, vorliegend einem Dieselmotor des landwirtschaftlichen Traktors 12, angetrieben.

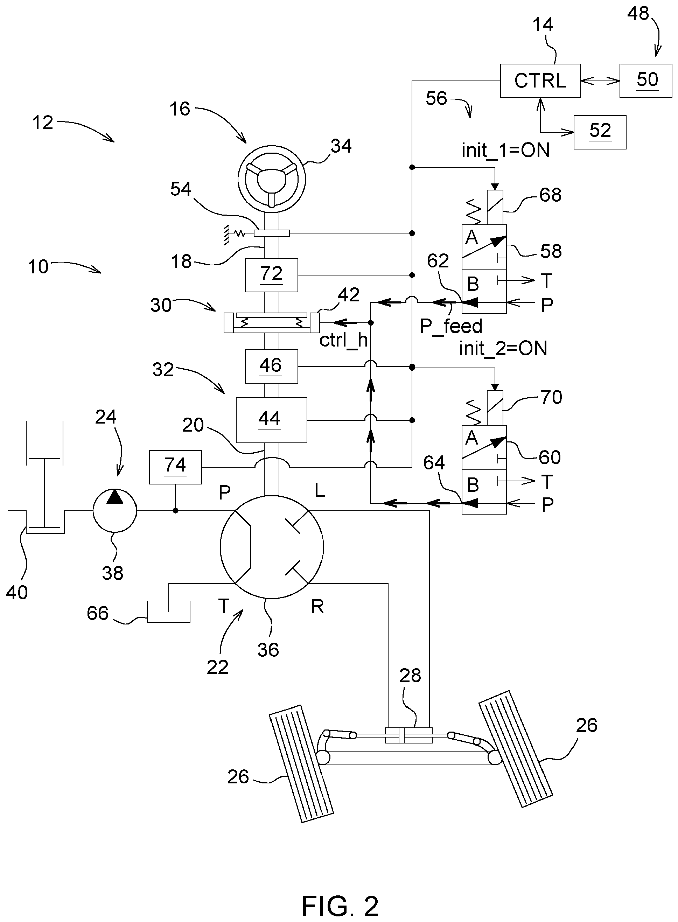

Entsprechend der in Fig. 1 bis 3 dargestellten ersten Ausführungsform der Fahrzeuglenkung 10 ist die Kupplungseinrichtung 30 hydraulisch druckbetätigbar ausgebildet, wobei diese in drucklosem Zustand unter der Wirkung einer rückstellenden Federkraft eines hydraulisch steuerbaren Umschaltmechanismus 42 selbsttätig eine geschlossene Kupplungsstellung einnimmt. Dieser Zustand entspricht einem in Fig. 1 wiedergegebenen, für den Fall einer manuellen Lenkbetätigung vorgesehenen ersten Betriebsmodus der Kupplungseinrichtung 30, in dem Eingangswelle 18 und Ausgangwelle 20 drehfest miteinander gekoppelt sind, sodass eine Drehung der Lenkhandhabe 16 und damit des Lenkdosierventils 22 unmittelbar in eine damit korrespondierende Auslenkung des Lenkzylinders 28 umgesetzt wird. Daneben ist in Fig. 2 ein für eine autonome Lenkbetätigung vorgesehener zweiter Betriebsmodus wiedergegeben, bei dem die Kupplungseinrichtung 30 auf Veranlassung der Kontrolleinheit 14 entgegen der Wirkung der rückstellenden Federkraft des Umschaltmechanismus 42 in eine geöffnete Kupplungsstellung verbracht wird.

Bei dem Stellantrieb 32 handelt es sich um einen von der Kontrolleinheit 14 ansteuerbaren elektrischen Getriebemotor 44.

In den Getriebemotor 44 ist eine (nicht gezeigte) Rutschkupplung integriert, die es erlaubt, dass der Bediener im ersten Betriebsmodus ungeachtet des jeweiligen Betriebszustands des Stellantriebs 32 durch Drehen der Lenkhandhabe 16 und damit des Lenkdosierventils 22 jederzeit Einfluss auf die Fahrzeuglenkung 10 nehmen kann.

Im Falle des für eine manuelle Lenkbetätigung vorgesehenen ersten Betriebsmodus gemäß Fig. 1 erfolgen die Lenkeingriffe über die Lenkhandhabe 16 bedienerseitig. Hierbei lässt sich mittels des Stellantriebs 32 durch gezielte Aufprägung eines entsprechenden Lenkmoments auf die Ausgangswelle 20 und damit auf die mit dieser über die Kupplungseinrichtung 30 in Drehverbindung stehende Eingangswelle 18 in einem von der Kontrolleinheit 14 ausgeführten **"Feedback-Assistenzmodus"** ein haptisch wahrnehmbares Betätigungs- bzw. Handmoment an der Lenkhandhabe 16 hervorrufen, um (i) auf eine über die Lenkhandhabe 16 auszuführende Fahrtrichtungskorrektur hinzuweisen, (ii) fahrtbedingt an den lenkbaren Fahrzeugrädern 26 einwirkende Stellmomente rückzumelden, und/oder (iii) einen vom Lenkeinschlag sowie gegebenenfalls weiteren Parametern abhängigen Lenkwiderstand zu erzeugen. Andererseits lässt sich aber auch in einem von der Kontrolleinheit 14 ausgeführten **"Emergency-Assistenzmodus"** bei einem Ausfall der Hydraulikversorgung der hydrostatischen Fahrzeuglenkung 10, insbesondere der hydraulischen Hochdruckpumpe 38, eine aktive Lenkkraftunterstützung verwirklichen. Das von dem Stellantrieb 32 erzeugte Lenkmoment wird hierbei mittels eines der Ausgangswelle 20 zugeordneten Drehmomentsensors 46 erfasst und zur Bildung eines Regelkreises an die Kontrolleinheit 14 rückgemeldet.

Die Feedback-Assistenzmodi (i), (ii) oder (iii) sind jeweiligen Lenkassistenzsystemen zugeordnet, deren Auswahl seitens des Bedieners über eine mit der Kontrolleinheit 14 in Verbindung stehende Nutzerschnittstelle 48, vorliegend eines berührungsempfindlichen Displays 50, erfolgt. Der Feedback-Assistenzmodus (iii) entspricht dabei einer sogenannten Parameterlenkung, bei der ein mit dem Lenkeinschlag zunehmender Betätigungswiderstand ebenso wie dessen fahrtgeschwindigkeitsabhängige Modifikation verwirklichbar ist.

Befindet sich die Kupplungseinrichtung 30 hingegen in dem der Durchführung eines autonomen Lenkbetriebs vorbehaltenen zweiten Betriebsmodus gemäß Fig. 2, so wird der Stellantrieb 32 von der Kontrolleinheit 14 nach Maßgabe von seitens einer autonomen Fahrzeugsteuerung 52 vorgegebenen Lenkbefehlen angesteuert, beispielsweise entsprechend einer von dem landwirtschaftlichen Traktor 12 zu durchfahrenden Bahntrajektorie. Die durch Öffnen der Kupplungseinrichtung 30 vorgenommene Trennung der Drehverbindung zwischen Ein- und Ausgangswelle 18, 20 gewährleistet in einem solchen **"Fahr-Assistenzmodus",** dass sich die Lenkhandhabe 16 dabei nicht in für den Bediener störender Art und Weise mitbewegt. Währenddessen wird die Lenkhandhabe 16 insoweit fixiert, als eine freie Drehung der Eingangswelle 18 mittels eines von der Kontrolleinheit 14 betätigbaren Bremselements 54 im zweiten Betriebsmodus gehemmt wird. Die Auswahl des Fahr-Assistenzmodus erfolgt hierbei bedienerseitig über die mit der Kontrolleinheit 14 kommunizierende Nutzerschnittstelle 48.

Zur Druckbetätigung der Kupplungseinrichtung 30 bzw. des Umschaltmechanismus 42 und damit zur Umschaltung vom ersten in den zweiten Betriebsmodus dient eine Betätigungsanordnung 56, die eine Parallelschaltung erster und zweiter hydraulischer 3/2-Wegeventile 58, 60 umfasst, deren Ventilauslässe 62, 64 miteinander verbunden sind. Hierbei lassen sich die beiden 3/2-Wegeventile 58, 60 zur Erzeugung eines den Umschaltmechanismus 42 ansteuernden hydraulischen Umschaltsignals ctrl_h auf Veranlassung eines von der Kontrolleinheit 14 übermittelten ersten und zweiten Auslösesignals init_1, init_2 aus einer die Ventilauslässe 62, 64 mit einem Hydraulikreservoir 66 verbindenden Ruheposition A (siehe Fig. 1) in eine die Ventilauslässe 62, 64 mit der Hydraulikquelle 24 bzw. der hydraulischen Hochdruckpumpe 38 verbindende Betriebsposition B überführen (siehe Fig. 2). Befinden sich beide 3/2-Wegeventile 58, 60 in ihrer Betriebsposition B, so liegt an den Ventilauslässen 62, 64 der von der hydraulischen Hochdruckpumpe 38 erzeugte Förderdruck p_feed an. Dieser dient der Beaufschlagung des Umschaltmechanismus 42, sodass die Kupplungseinrichtung 30 in ihre geöffnete Kupplungsstellung gedrängt wird.

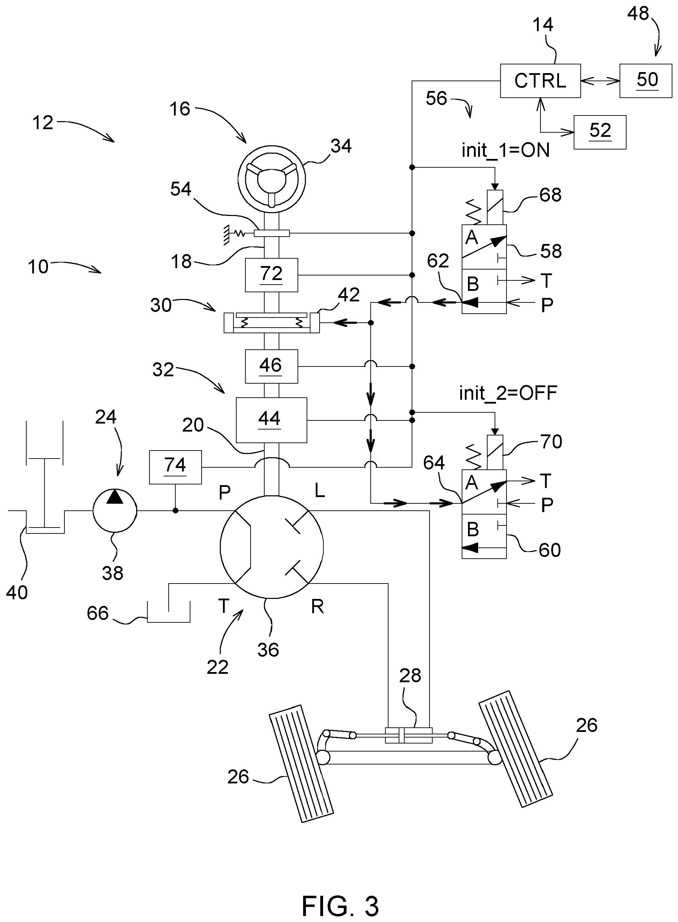

Befindet sich eines der beiden 3/2-Wegeventile 58, 60 in seiner Ruheposition A, so ist ein Druckaufbau an den Ventilauslässen 62, 64 aufgrund der mit dem Hydraulikreservoir 66 bestehenden Druckentlastungsverbindung unterbunden. Diese Situation ist in Fig. 3 dargestellt, in der eine Failsafe-Funktion verwirklicht ist, die bei einem Ausfall eines der beiden 3/2-Wegeventile 58, 60 oder fehlerhafter Auslösesignale init_1, init_2 sicherstellt, dass die Kupplungseinrichtung 30 in ihrer geschlossenen Kupplungsstellung verbleibt.

Im Ergebnis wird die Kupplungseinrichtung 30 ausschließlich dann in ihre geöffnete Kupplungsstellung verbracht, sofern beide 3/2-Wegeventile 58, 60 sich gleichzeitig in ihrer Betriebsposition B befinden und das an den Ventilauslässen 62, 64 anliegende hydraulische Umschaltsignal ctrl_h einen zur Betätigung der Kupplungseinrichtung 30 bzw. des Umschaltmechanismus 42 geeigneten Druckwert, hier derjenige des Förderdrucks p_feed, annimmt.

Hierdurch ist eine UND-Verknüpfung der beiden Auslösesignale init_1, init_2 gebildet, die weitgehend ausschließt, dass die mittels der Kupplungseinrichtung 30 zwischen Ein- und Ausgangswelle 18, 20 hergestellte Drehverbindung unbeabsichtigt aufgetrennt wird.

Die eigentliche Betätigung der 3/2-Wegeventile 58, 60 seitens der von der Kontrolleinheit 14 übermittelten Auslösesignale init_1, init_2 erfolgt elektrisch, vorliegend durch Verwendung eines jeweils zugehörigen Solenoids 68, 70.

Um sicherzustellen, dass der Bediener stets die Kontrolle über die Fahrzeuglenkung 10 behält, wird die Kupplungseinrichtung 30 ausgehend vom zweiten Betriebsmodus im Falle einer über die Lenkhandhabe 16 ausgeübten manuellen Lenkbetätigung und/oder eines Druckabfalls der zur Speisung des Lenkdosierventils 22 vorgesehenen Hydraulikquelle 24 bzw. hydraulischen Hochdruckpumpe 38 in den ersten Betriebsmodus umgeschaltet. Letzteres entspricht dem für einen Ausfall der Hydraulikversorgung der Fahrzeuglenkung 10 vorgesehenen Emergency-Assistenzmodus. Die Umschaltung in den ersten Betriebsmodus erfolgt in diesem Fall selbsttätig seitens der Kontrolleinheit 14, wozu diese die Signale eines Winkelsensors 72 zur Erfassung einer an der Lenkhandhandhabe 16 bzw. der Eingangswelle 18 der Fahrzeuglenkung 10 auftretenden Drehung bzw. eines Drucksensors 74 zur Überwachung des Förderdrucks p_feed der hydraulischen Hochdruckpumpe 38 auswertet.

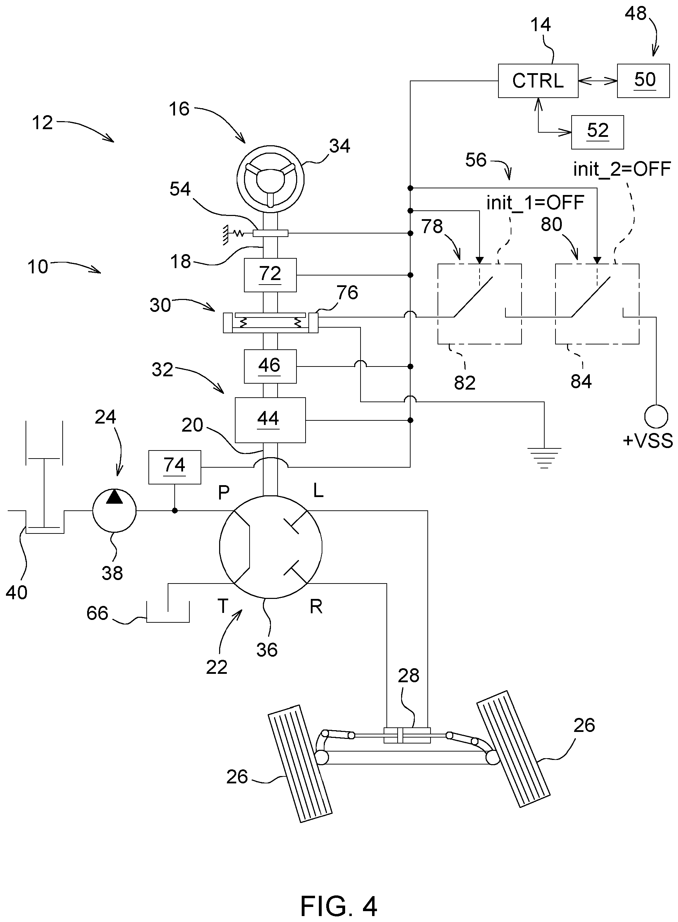

In Fig. 4 bis 6 ist eine zweite Ausführungsform einer mittels des erfindungsgemäßen Verfahrens betriebenen hydrostatischen Fahrzeuglenkung 10 abgebildet. Diese unterscheidet sich gegenüber der ersten Ausführungsform ausschließlich hinsichtlich der Ausbildung der Betätigungsanordnung 56. So ist die Kupplungseinrichtung 30 vorliegend elektrisch betätigbar ausgebildet, wobei diese gemäß Fig. 4 in unbestromtem Zustand unter der Wirkung einer rückstellenden Federkraft eines elektrisch steuerbaren Umschaltmechanismus 76 selbsttätig die geschlossene Kupplungsstellung einnimmt. Bezüglich der Verwirklichung der verschiedenen (Assistenz-) Modi sei daher auf die Beschreibung der ersten Ausführungsform verwiesen.

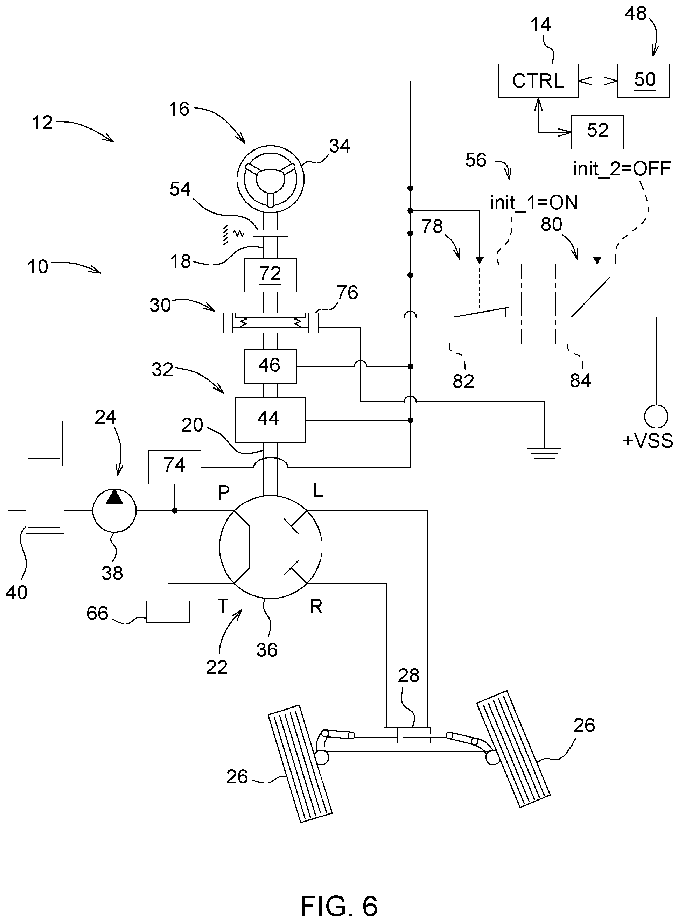

Beispielsgemäß umfasst die Betätigungsanordnung 56 eine Reihenschaltung erster und zweiter elektrischer Schließkontakte 78, 80. Diese lassen sich zur Erzeugung eines den Umschaltmechanismus 76 ansteuernden elektrischen Umschaltsignals ctrl_e auf Veranlassung eines von der Kontrolleinheit 14 übermittelten ersten und zweiten Auslösesignals init_1, init_2 in eine geschlossene Stellung verbringen. Die vorliegend als Bestandteil zugehöriger Relais 82, 84 ausgebildeten elektrischen Schließkontakte 78, 80 zeichnen sich dadurch aus, dass diese in unbetätigtem Zustand unter der Wirkung einer rückstellenden Federkraft von selbst eine geöffnete Stellung einnehmen. Hierdurch lässt sich auch im Falle der zweiten Ausführungsform eine in Fig. 6 veranschaulichte Failsafe-Funktion verwirklichen, die bei einem Ausfall eines der beiden Relais 82, 84 oder fehlerhafter Auslösesignale init_1, init_2 sicherstellt, dass die Kupplungseinrichtung 30 in ihrer geschlossenen Kupplungsstellung verbleibt.

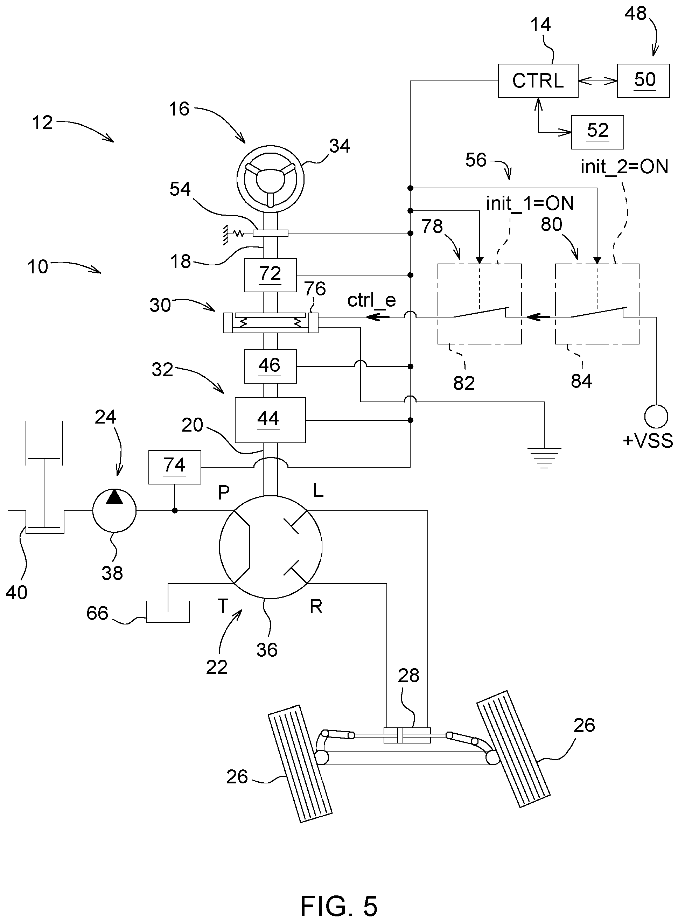

Gemäß Fig. 5 wird die Kupplungseinrichtung 30 ausschließlich dann in ihre geöffnete Kupplungsstellung verbracht, sofern beide Schließkontakte 78, 80 gleichzeitig ihre geschlossene Stellung einnehmen und dabei das ausgangsseitig anliegende elektrische Umschaltsignal ctrl_e einen zur Betätigung der Kupplungseinrichtung 30 bzw. des Umschaltmechanismus 76 geeigneten Spannungswert +Vss (entsprechend der Bordnetzspannung des landwirtschaftlichen Traktors 12) annimmt.

Die solchermaßen gebildete UND-Verknüpfung der beiden Auslösesignale init_1, init_2 schließt auch hier weitgehend aus, dass die mittels der Kupplungseinrichtung 30 zwischen Ein- und Ausgangswelle 18, 20 hergestellte Drehverbindung unbeabsichtigt aufgetrennt wird.

## Patentansprüche

1. Verfahren zum Betreiben einer hydrostatischen Fahrzeuglenkung, die eine mittels einer Lenkhandhabe (16) drehbetätigbare Eingangswelle (18), eine Ausgangswelle (20) zur Drehbetätigung eines Lenkdosierventils (22), das der hydraulischen Ansteuerung eines mit lenkbaren Fahrzeugrädern (26) zusammenwirkenden Lenkzylinders (28) dient, eine Kupplungseinrichtung (30) zur Herstellung einer lösbaren Drehverbindung zwischen Ein- und Ausgangswelle (18, 20), sowie einen Stellantrieb (32) zur Aufprägung eines vorgebbaren Lenkmoments auf die Ausgangswelle (20) umfasst, wobei die Kupplungseinrichtung (30) in einem für eine manuelle Lenkbetätigung vorgesehenen ersten Betriebsmodus unter der Wirkung einer rückstellenden Federkraft selbsttätig eine geschlossene Kupplungsstellung einnimmt und in einem für eine autonome Lenkbetätigung vorgesehenen zweiten Betriebsmodus auf Veranlassung einer Kontrolleinheit (14) entgegen der Wirkung der rückstellenden Federkraft in eine geöffnete Kupplungsstellung verbracht wird, **dadurch gekennzeichnet, dass** die Kupplungseinrichtung (30) auf Veranlassung eines mittels einer Betätigungsanordnung (56) erzeugbaren Umschaltsignals ausschließlich dann in die offene Kupplungsstellung verbracht wird, wenn von der Kontrolleinheit (14) übermittelte erste und zweite Auslösesignale an der Betätigungsanordnung (56) gleichzeitig anliegen.

2. Verfahren nach Anspruch 1, **dadurch gekennzeichnet, dass** der Stellantrieb (32) im ersten Betriebsmodus von der Kontrolleinheit (14) im Sinne einer haptisch wahrnehmbaren Lenkungsrückmeldung und/oder einer Verringerung bedienerseitig aufzubringender Lenkbetätigungskräfte angesteuert wird.

3. Verfahren nach Anspruch 1 oder 2, **dadurch gekennzeichnet, dass** der Stellantrieb (32) im zweiten Betriebsmodus von der Kontrolleinheit (14) nach Maßgabe von seitens einer autonomen Fahrzeugsteuerung (52) vorgegebenen Lenkbefehlen angesteuert wird.

4. Verfahren nach wenigstens einem der vorhergehenden Ansprüche, **dadurch gekennzeichnet, dass** eine freie Drehung der Eingangswelle (18) mittels eines passiven oder von der Kontrolleinheit (14) betätigbaren Bremselements (54) im zweiten Betriebsmodus gehemmt wird.

5. Verfahren nach wenigstens einem der vorhergehenden Ansprüche, **dadurch gekennzeichnet, dass** es sich bei dem Stellantrieb (32) um einen von der Kontrolleinheit (14) ansteuerbaren elektrischen Getriebemotor (44) handelt.

6. Verfahren nach wenigstens einem der vorhergehenden Ansprüche, **dadurch gekennzeichnet, dass** die Kupplungseinrichtung (30) ausgehend vom zweiten Betriebsmodus im Falle einer über die Lenkhandhabe (16) ausgeübten manuellen Lenkbetätigung und/oder eines Druckabfalls einer zur Speisung des Lenkdosierventils (22) mit unter Druck stehender Hydraulikflüssigkeit vorgesehenen Hydraulikquelle (24) in den ersten Betriebsmodus umgeschaltet wird.

7. Verfahren nach wenigstens einem der vorhergehenden Ansprüche, **dadurch gekennzeichnet, dass** die Kupplungseinrichtung (30) elektrisch betätigbar ausgebildet ist, wobei diese in unbestromtem Zustand unter der Wirkung einer rückstellenden Federkraft eines elektrisch steuerbaren Umschaltmechanismus (76) selbsttätig die geschlossene Kupplungsstellung einnimmt.

8. Verfahren nach Anspruch 7, **dadurch gekennzeichnet, dass** die Betätigungsanordnung (56) eine Reihenschaltung erster und zweiter elektrischer Schließkontakte (78, 80) umfasst, die zur Erzeugung eines den Umschaltmechanismus (76) ansteuernden elektrischen Umschaltsignals auf Veranlassung des ersten und zweiten Auslösesignals in eine geschlossene Stellung verbracht werden.

9. Verfahren nach wenigstens einem der vorhergehenden Ansprüche, **dadurch gekennzeichnet, dass** die Kupplungseinrichtung (30) hydraulisch druckbetätigbar ausgebildet ist, wobei diese in drucklosem Zustand unter der Wirkung einer rückstellenden Federkraft eines hydraulisch steuerbaren Umschaltmechanismus (42) selbsttätig die geschlossene Kupplungsstellung einnimmt.

10. Verfahren nach Anspruch 9, **dadurch gekennzeichnet, dass** die Betätigungsanordnung (56) eine Parallelschaltung erster und zweiter hydraulischer 3/2-Wegeventile (58, 60) umfasst, deren Ventilauslässe (62, 64) miteinander verbunden sind, wobei diese zur Erzeugung eines den Umschaltmechanismus (42) ansteuernden hydraulischen Umschaltsignals auf Veranlassung des ersten und zweiten Auslösesignals aus einer die Ventilauslässe (62, 64) mit einem Hydraulikreservoir (66) verbindenden Ruheposition in eine die Ventilauslässe (62, 64) mit einer Hydraulikquelle (24) verbindende Betriebsposition überführt werden.

## Claims

1. Method for operating a hydrostatic vehicle steering system that comprises an input shaft (18), which can be rotationally operated by means of a steering handle (16); an output shaft (20) for rotary operation of a steering dosing valve (22), which is used for hydraulic actuation of a steering cylinder (28) interacting with steerable vehicle wheels (26); a clutch device (30) for establishing a releasable rotary connection between the input shaft (18) and the output shaft (20); and an actuating drive (32) for applying a predefinable steering torque to the output shaft (20), wherein the clutch device (30) automatically assumes a closed clutch position under the effect of a restoring spring force in a first operating mode intended for manual steering operation and is brought into an open clutch position counter to the effect of the restoring spring force at the prompting of a control unit (14) in a second operating mode intended for autonomous steering operation, **characterized in that** the clutch device (30) is brought into the open clutch position, at the prompting of a switchover signal that can be generated by means of an operating arrangement (56), only when first and second trigger signals transmitted by the control unit (14) are present at the operating arrangement (56) at the same time.

2. Method according to Claim 1, **characterized in that**, in the first operating mode, the actuating drive (32) is actuated by the control unit (14) in the sense of haptically perceivable steering feedback and/or a reduction in steering operation forces to be applied by the operator.

3. Method according to Claim 1 or 2, **characterized in that**, in the second operating mode, the actuating drive (32) is actuated by the control unit (14) according to steering commands predefined by an autonomous vehicle controller (52).

4. Method according to at least one of the preceding claims, **characterized in that**, in the second operating mode, a free rotation of the input shaft (18) is inhibited by means of a brake element (54) that is passive or can be operated by the control unit (14).

5. Method according to at least one of the preceding claims, **characterized in that** the actuating drive (32) is an electric gear motor (44) that can be actuated by the control unit (14).

6. Method according to at least one of the preceding claims, **characterized in that** the clutch device (30) is switched over into the first operating mode from the second operating mode in the event of a manual steering operation exerted via the steering handle (16) and/or a pressure drop of a hydraulic source (24) provided for feeding the steering dosing valve (22) with pressurized hydraulic fluid.

7. Method according to at least one of the preceding claims, **characterized in that** the clutch device (30) is electrically operated, wherein it automatically assumes the closed clutch position under the effect of a restoring spring force of an electrically controllable switchover mechanism (76) when in the non-energized state.

8. Method according to Claim 7, **characterized in that** the operating arrangement (56) comprises a series circuit of first and second electrical normally open contacts (78, 80), which are brought into a closed position at the prompting of the first and second trigger signals to generate an electrical switchover signal actuating the switchover mechanism (76).

9. Method according to at least one of the preceding claims, **characterized in that** the clutch device (30) is designed to be operated by hydraulic pressure, wherein it automatically assumes the closed clutch position under the effect of a restoring spring force of a hydraulically controllable switchover mechanism (42) when in the depressurized state.

10. Method according to Claim 9, **characterized in that** the operating arrangement (56) comprises a parallel circuit of first and second hydraulic 3/2-way valves (58, 60), the valve outlets (62, 64) of which are connected to one another, wherein these are transferred from a rest position connecting the valve outlets (62, 64) to a hydraulic reservoir (66) into an operating position connecting the valve outlets (62, 64) to a hydraulic source (24) at the prompting of the first and second trigger signals in order to generate a hydraulic switchover signal actuating the switchover mechanism (42) .

## Revendications

1. Procédé de fonctionnement d'une direction hydrostatique de véhicule, comprenant un arbre d'entrée (18) pouvant être actionné en rotation au moyen d'un organe manuel de direction (16), un arbre de sortie (20) pour l'actionnement en rotation d'une soupape de dosage de direction (22), qui sert à la commande hydraulique d'un vérin de direction (28) coopérant avec des roues directrices (26) du véhicule, un dispositif d'accouplement (30) pour l'établissement d'une liaison rotative amovible entre les arbres d'entrée et de sortie (18, 20), ainsi qu'un actionneur (32) pour appliquer un couple de braquage prédéfinissable à l'arbre de sortie (20), le dispositif d'accouplement (30) adoptant automatiquement une position d'accouplement fermée sous l'action d'une force de rappel dans un premier mode de fonctionnement prévu pour un actionnement manuel de la direction, et étant amené dans une position d'accouplement ouverte à l'instigation d'une unité de commande (14) à l'encontre de l'action de la force de rappel dans un second mode de fonctionnement prévu pour un actionnement de direction autonome, **caractérisé en ce que** le dispositif d'accouplement (30) n'est amené dans la position d'accouplement ouverte à l'instigation d'un signal de commutation pouvant être généré au moyen d'un agencement d'actionnement (56) que si des premier et deuxième signaux de déclenchement transmis par l'unité de commande (14) sont présents simultanément au niveau de l'agencement d'actionnement (56).

2. Procédé selon la revendication 1, **caractérisé en ce que** l'actionneur (32), dans le premier mode de fonctionnement, est commandé par l'unité de commande (14) dans le sens d'une rétroaction de direction perceptible de manière haptique et/ou d'une réduction des forces d'actionnement de direction à appliquer côté opérateur.

3. Procédé selon la revendication 1 ou 2, **caractérisé en ce que** l'actionneur (32) est commandé, dans le deuxième mode de fonctionnement, par l'unité de commande (14) conformément à des instructions de direction prédéfinies par une commande de véhicule autonome (52).

4. Procédé selon au moins l'une des revendications précédentes, **caractérisé en ce qu'**une rotation libre de l'arbre d'entrée (18) est empêchée, dans le deuxième mode de fonctionnement, au moyen d'un élément de freinage (54) passif ou pouvant être actionné par l'unité de commande (14).

5. Procédé selon au moins l'une des revendications précédentes, **caractérisé en ce que** l'actionneur (32) est un motoréducteur électrique (44) pouvant être commandé par l'unité de commande (14).

6. Procédé selon au moins l'une des revendications précédentes, **caractérisé en ce que** le dispositif d'accouplement (30) est amené à passer du deuxième mode de fonctionnement au premier mode de fonctionnement en cas d'actionnement manuel de la direction exercé par l'intermédiaire de l'organe manuel de direction (16) et/ou d'une chute de pression d'une source hydraulique (24) prévue pour alimenter la soupape de dosage de direction (22) en fluide hydraulique sous pression.

7. Procédé selon au moins l'une des revendications précédentes, **caractérisé en ce que** le dispositif d'accouplement (30) est conçu pour être actionné électriquement, celui-ci adoptant automatiquement la position d'accouplement fermée à l'état non alimenté en courant sous l'effet d'une force de rappel d'un mécanisme de commutation (76) à commande électrique.

8. Procédé selon la revendication 7, **caractérisé en ce que** l'agencement d'actionnement (56) comprend un montage en série de premier et deuxième contacts de fermeture électriques (78, 80) qui, à l'instigation des premier et deuxième signaux de déclenchement, sont amenés dans une position fermée pour générer un signal de commutation électrique commandant le mécanisme de commutation (76).

9. Procédé selon au moins l'une des revendications précédentes, **caractérisé en ce que** le dispositif d'accouplement (30) est conçu pour être actionné par pression hydraulique, celui-ci adoptant automatiquement la position d'accouplement fermée dans un état sans pression sous l'effet d'une force de rappel d'un mécanisme de commutation (42) à commande hydraulique.

10. Procédé selon la revendication 9, **caractérisé en ce que** l'agencement d'actionnement (56) comprend un montage en parallèle de première et deuxième vannes hydrauliques à 3/2 voies (58, 60), dont les sorties de vannes (62, 64) sont reliées l'une à l'autre, celles-ci étant amenées à passer d'une position de repos reliant les sorties (62, 64) à un réservoir hydraulique (66) à une position de fonctionnement reliant les sorties (62, 64) à une source hydraulique (24) pour générer un signal de commutation hydraulique commandant le mécanisme de commutation (42) à l'instigation des premier et deuxième signaux de déclenchement.
